# FASCICULE DE BREVET EUROPEEN

(11) **EP 2 944 751 B1**
(45) Date de publication et mention de la délivrance du brevet: **19.10.2016**
(21) Numéro de dépôt: 15165270.8
(22) Date de dépôt: 27.04.2015
(51) Int. Cl.: E05C 19/16, H01F 7/02, F16B 5/06

(54) **DISPOSITIF DE FIXATION POUR FIXER UN PANNEAU À UNE STRUCTURE, ET AÉRONEF**
BEFESTIGUNGSVORRICHTUNG ZUM BEFESTIGEN EINES PANEELS AN EINE STRUKTUR, UND LUFTFAHRZEUG
A FASTENER DEVICE FOR FASTENING A PANEL TO A STRUCTURE, AND AN AIRCRAFT

(30) Priorité: 12.05.2014 FR 1401059
(43) Date de publication de la demande: 18.11.2015
(73) Titulaire: Airbus Helicopters, 13725 Marignane Cedex (FR)
(72) Inventeur: Giacalone, Jean-Michel, 13320 Bouc Bel Air (FR); Peyrusaubes, Clément, 13090 Aix en Provence (FR); Denavaux, Marc, 83860 Nans-les-Pins (FR)
(74) Mandataire: GPI & Associés

(56) Documents cités:
- DE-C- 145 325
- GB-A- 1 056 797
- US-A- 2 970 857
- US-A- 4 585 197
- US-A1- 2008 143 030

## Description

La présente invention concerne un dispositif de fixation d'un panneau et notamment d'un panneau d'habillage d'un habitacle, et un aéronef muni de ce dispositif.

Un aéronef comporte usuellement des panneaux recouvrant les parois d'un habitacle. Dès lors, de tels panneaux sont communément dénommés « panneaux d'habillage ».

Les panneaux sont fixés aux structures délimitant l'habitable par des dispositifs dénommés « dispositif de fixation » par commodité.

Un dispositif de fixation connu comprend des moyens de vissage. Chaque panneau est alors directement vissé à une structure.

Un tel dispositif de fixation à visseries présente l'avantage d'être fiable et peu onéreux.

Toutefois, ce dispositif de fixation est par essence visible, ce qui peut être gênant d'un point de vue esthétique sur certains aéronefs.

De plus, ce dispositif de fixation peut offrir de faibles tolérances de montage, et peut donc conduire à des difficultés d'assemblage.

En outre, un aéronef peut être sujet à des vibrations. Un dispositif de fixation à visseries s'avère faiblement amortissant en termes de vibrations.

D'autres dispositifs de fixation peuvent mettre en oeuvre des broches à billes ou des pions et des réceptacles interposés entre le panneau et la structure.

Ces dispositifs de fixation sont alors peu visibles voire invisibles, et offrent des tolérances de montage intéressantes.

Toutefois, ces dispositifs de fixation peuvent être onéreux, et faiblement amortissants en termes de vibrations.

Par ailleurs, un aéronef doit répondre à des règlements de certification en termes de tenue au crash. La justification de la tenue au crash de ces dispositifs de fixation peut s'avérer délicate.

Par suite, la mise en oeuvre d'un dispositif de fixation d'un panneau sur un aéronef conduit à des difficultés spécifiques en termes de vibrations et de tenue au crash notamment. L'invention se situe donc particulièrement dans ce domaine technique.

Dès lors, un dispositif de fixation d'un panneau d'un aéronef peut comporter au moins un des avantages suivants : être le moins visible possible, tolérant à l'assemblage, léger, peu onéreux, fiable, amortissant, compatible avec les règlements de certification en termes de tenue au crash.

Le document US 2002/197107 décrit un dispositif de fixation pour fixer un panneau décoratif à une automobile. Ce document ne fait donc pas référence aux problèmes spécifiques d'un aéronef.

Le dispositif de fixation est muni d'une base reliée à un plateau porteur. Le plateau porteur supporte un moyen de fixation qui peut être magnétique.

Le document WO 2009/108461 concerne une fixation magnétique munie d'un support. Un ensemble magnétique annulaire portant un aimant est alors emmanché autour d'un pion du support et d'un aimant.

Le support est alors fixé à un organe pour lier cet organe à une plaque métallique via l'aimant.

Ce dispositif est intéressant. Toutefois, l'agencement d'un panneau d'habillage contre une structure d'aéronef peut générer des contraintes de positionnement tel qu'un désalignement du panneau par rapport à la structure.

En outre, un aimant est susceptible de se dégrader lorsque l'aimant rentre en contact « violemment » contre un autre aimant ou une plaque métallique. En effet, un aimant est relativement peu résistant à un choc.

La tenue au crash d'un aimant peut aussi être délicate à obtenir.

Le document US 5.280.991 décrit un dispositif de fixation magnétique d'un panneau de toit d'un véhicule. Ce dispositif de fixation comporte des aimants incorporés sur une périphérie du panneau.

Le document US 7.178.207 décrit un dispositif de fixation magnétique ayant deux aimants.

On connaît aussi les documents GB 1.055.797 A, US 4.585.197 A, US 2.970.857 A, DE 145.325 C, US 2008/143030 A1 DE 20.2004.001958 U1.

Le document GB 1.056.797 A décrit un dispositif avec les caractéristiques du préambule de la revendication 1.

La présente invention a alors pour objet de proposer un dispositif de fixation visant à présenter au moins un des avantages suivants : être le moins visible possible, tolérant à l'assemblage, léger, peu onéreux, fiable, amortissant, compatible avec les règlements de certification en termes de tenue au crash.

L'invention vise donc un dispositif de fixation pour fixer un panneau à une structure, ce dispositif de fixation étant muni d'au moins un ensemble de fixation réversible comprenant un plot mobile apte à être fixé au panneau et un plot fixe apte à être fixé à la structure, le plot mobile comportant un premier moyen d'aimantation coopérant avec un deuxième moyen d'aimantation du plot fixe, au moins un moyen d'aimantation comportant un aimant.

En outre au moins un moyen d'aimantation est porté par une rotule du plot associé.

De plus, chaque moyen d'aimantation est solidaire en translation d'un moyen de déplacement pour être déplacé en translation le long d'un axe longitudinal du plot associé d'une position d'engagement à une position de désengagement de manière réversible.

Les moyens d'aimantation sont fortement aimantés l'un à l'autre lorsqu'ils sont en vis-à-vis et chacun dans la position d'engagement et n'étant pas aimantés ou faiblement aimantés lorsqu'au moins un moyen d'aimantation est dans sa position de désengagement.

Chaque moyen d'aimantation est alors soit fixé directement au moyen de déplacement correspondant, soit porté par une rotule qui est fixée au moyen de déplacement. Eventuellement, chaque moyen d'aimantation est porté par une rotule.

En outre, l'axe longitudinal du plot mobile dit « premier axe longitudinal » est sensiblement parallèle à l'axe longitudinal du plot fixe dit « deuxième axe longitudinal ». On entend par « sensiblement horizontal » que le premier axe longitudinal et le deuxième axe longitudinal sont coaxiaux lorsque le plot mobile et le plot fixe sont parfaitement positionnés et aimantés l'un à l'autre. Dès lors, chaque moyen d'aimantation porté par une rotule possède par rapport à un carter du plot associé, trois degrés de liberté en rotation conférés par la rotule. Ces degrés de liberté permettent d'autoriser un décalage entre le plot mobile et le plot fixe, par exemple un décalage angulaire, transversal et/ou en élévation.

Par suite, le dispositif de fixation offre une tolérance intéressante à l'assemblage. Cette caractéristique permet d'assouplir la précision du positionnement du panneau par rapport à la structure à habiller.

De plus, ces degrés de liberté en rotation tendent à réduire les risques de blocage du dispositif, suite à un arcboutement par exemple provoqué par la déformation du panneau d'habillage ou de la structure à habiller.

En outre, le plot mobile peut être accolé à une face interne du panneau en regard d'une face de cette structure. Il en résulte que le dispositif de fixation est relativement peu visible d'une cabine.

Par ailleurs, le dispositif de fixation peut être standardisé afin d'être utilisé pour la fixation de multiples panneaux distincts. Cette standardisation peut faciliter le travail d'un bureau d'étude réalisant un aménagement intérieur. De plus, la standardisation permet de faciliter la réalisation de plans d'interface entre les panneaux et les structures à habiller.

Par ailleurs, ce dispositif de fixation est simple à mettre en oeuvre et tend à limiter la détérioration de chaque aimant, par exemple un aimant néodynium de forte capacité.

En effet, un opérateur peut manoeuvrer les dispositifs de déplacement pour positionner les moyens d'aimantation dans leur position de désengagement.

En effet, outre des degrés de liberté en rotation, chaque moyen d'aimantation présente un degré de liberté en translation le long d'un axe longitudinal.

Pour fixer le panneau à une structure, un opérateur peut alors induire le déplacement en translation du moyen d'aimantation du plot mobile dans la position de désengagement. Ce moyen d'aimantation est dénommé « premier moyen d'aimantation » par commodité.

Pour faciliter la lecture, on qualifie de « premier » un organe du plot mobile et de « deuxième » l'organe correspondant du plot fixe.

Par suite, l'opérateur positionne le moyen d'aimantation du plot fixe dans la position d'engagement. Ce moyen d'aimantation est dénommé « deuxième moyen d'aimantation » compte tenu de la convention décrite ci-dessus.

L'opérateur pousse alors le panneau vers la structure en accolant sensiblement chaque plot mobile au plot fixe correspondant.

Le premier moyen d'aimantation de chaque plot mobile étant dans la position de désengagement, l'aimantation du premier moyen d'aimantation au deuxième moyen d'aimantation est faible voire nulle compte tenu de l'entrefer les séparant.

L'opérateur réduit alors cet entrefer à son minimum en induisant le déplacement du premier moyen d'aimantation de chaque plot mobile dans la position d'engagement. L'aimantation du premier moyen d'aimantation au deuxième moyen d'aimantation est alors élevée pour maintenir le panneau en position.

Le déplacement longitudinal des moyens d'aimantation présente l'avantage notable d'éviter un choc « violent » entre les moyens d'aimantation. Lors d'un choc de ce type, les moyens d'aimantation « claquent » selon l'expression de l'homme du métier ce qui peut conduire à un écaillage des moyens d'aimantation et à une réduction de leur pouvoir d'attraction dans le cadre d'un aimant.

L'invention permet donc d'utiliser une technologie d'aimantation relativement peu onéreuse, de manière fiable dans le temps afin de fixer un panneau à une structure. Cette technologie permet un montage invisible, fiable, et tolérant dans la mesure où au moins un moyen d'aimantation est agencé dans le berceau d'une rotule.

Pour écarter le panneau, l'opérateur déplace longitudinalement le premier moyen d'aimantation de chaque plot mobile dans la position de désengagement. La force d'attraction mutuelle des moyens d'aimantation du plot mobile et du plot fixe d'un ensemble n'est alors plus suffisante pour empêcher un opérateur de déplacer le panneau par rapport à la structure.

Ce dispositif de fixation peut de plus comporter une ou plusieurs des caractéristiques additionnelles qui suivent.

Ainsi, le dispositif de fixation peut comporter au moins une articulation à pivot apte à être fixée au panneau et à la structure pour autoriser une rotation du panneau par rapport à la structure.

Par exemple, chaque articulation à pivot est agencée dans une partie inférieure d'un panneau alors qu'un plot mobile est fixé dans une partie supérieure du panneau.

Un opérateur fixe alors le panneau à l'articulation à pivot, puis pivote le panneau pour le fixer à la structure. Cette articulation à pivot facilite le positionnement du panneau par rapport à la structure.

En outre, chaque moyen d'aimantation d'un ensemble de fixation comporte un aimant, soit un moyen d'aimantation comporte un aimant et l'autre moyen d'aimantation comporte une plaque métallique.

Le premier moyen d'aimantation et le deuxième moyen d'aimantation peuvent donc tout deux comprendre des aimants.

Cependant, si la force d'attraction est très élevée, un seul moyen d'aimantation peut être muni d'un aimant. Par exemple, le premier moyen d'aimantation peut comporter un aimant, alors que le deuxième moyen d'aimantation d'un ensemble de fixation comporte une plaque apte à être aimantée audit aimant.

Par ailleurs, au moins un moyen d'aimantation comportant une face dite « face de liaison » à aimanter à l'autre moyen d'aimantation, cette face de liaison est éventuellement recouverte d'un organe antifriction.

Par exemple une pastille de téflon® est collée sur la face de liaison d'un moyen d'aimantation de type aimant.

Cette caractéristique est notamment intéressante dans un milieu soumis à des vibrations pour éviter que ces vibrations n'érodent les moyens d'aimantation, et le cas échéant leur couche de protection nickelée.

Par ailleurs, au moins un plot peut comporter un moyen de déplacement muni d'un bras, ce bras comprenant une vis sans fin engagée dans un écrou attaché à un carter du plot, le moyen de déplacement étant pourvu d'un moyen d'entraînement pour mettre en rotation le bras afin d'induire la translation ce bras.

L'écrou étant solidaire du carter du plot, une rotation de la vis sans fin induit de fait un déplacement longitudinal du bras, de la rotule le cas échéant et du moyen d'aimantation du plot.

Ce système est relativement simple et potentiellement peu onéreux.

En outre, le bras peut s'étendre longitudinalement d'une extrémité reliée à un moyen d'aimantation, éventuellement au travers d'une rotule, vers une extrémité munie d'une base crantée, le moyen d'entraînement comportant une crémaillère mobile transversalement, une périphérie de ladite base étant au moins partiellement crantée en comportant au moins un cran en prise avec la crémaillère.

Par suite, une translation de la crémaillère induit une rotation de la base crantée selon le principe de fonctionnement d'une came. Cette rotation induit alors une rotation de la vis sans fin et finalement une translation de la vis sans fin et du moyen d'aimantation.

A cet effet, le moyen d'entraînement du plot mobile peut comporter un câble solidaire de ladite crémaillère.

La conception des plots mobiles permet d'utiliser une seule commande à câble pour activer simultanément plusieurs plots mobiles. Ainsi, le dispositif de fixation peut inclure une pluralité d'ensembles de fixation incluant chacun un plot mobile et un plot fixe, les crémaillères de plusieurs plots mobiles étant reliées à une même commande à câble.

Le chainage obtenu entre les plots mobiles permet de simplifier la commande du panneau lorsque plusieurs plots mobiles sont utilisés, et aussi de réduire la masse du système de commande.

La crémaillère peut aussi être commandée par un système électrique par exemple

De manière alternative ou complémentaire, le moyen d'entraînement d'un plot mobile peut comporter un orifice du bras apte à accueillir la tête d'un outil de vissage/dévissage, un carter dudit plot comprenant un passage pour guider un tel outil vers ledit orifice.

Le moyen d'entraînement comporte donc un outil, tel que par exemple une clé à six pans. Cet outil chemine au sein du plot mobile pour être inséré dans un orifice du bras du moyen de déplacement, par exemple dans la base crantée précédemment décrite.

Le dispositif de fixation peut donc offrir au minimum deux possibilités distinctes pour contrôler la position d'un moyen d'aimantation d'un plot mobile notamment.

Par ailleurs, le dispositif de fixation peut comporter un système de tenue au crash muni d'un lien de sécurité enroulé autour d'un enrouleur autobloquant dudit plot mobile, ledit lien de sécurité portant une broche à billes insérable de manière réversible et manuelle dans un réceptacle dudit plot fixe. Ce réceptacle peut être solidaire d'un carter du plot fixe.

Chaque ou au moins un ensemble de fixation peut comprendre un système de tenue au crash mettant en oeuvre un lien de sécurité s'étendant entre le plot mobile et le plot fixe.

Cette architecture permet de séparer la fonction « maintien du panneau aux cas de charges opérationnels » remplie à l'aide des moyens d'aimantation pour supporter des efforts faibles, et la fonction « maintien du panneau aux cas de charges crashs » remplie à l'aide du système de tenue au crash pour supporter des efforts élevés.

En parallèle des moyens d'aimantation, un système de retenue par filin permet de résister aux efforts liés au crash. Le lien de sécurité représente en effet un filin monté sur un enrouleur autobloquant qui permet de minimiser la course du panneau par rapport à la structure en cas de crash

De plus, ce lien de sécurité autorise le maintien du panneau dans une position semi-ouverte pour des activités de maintenance.

Ce lien de sécurité est dimensionné pour supporter un effort relativement élevé comparé à sa masse. Ce dimensionnement est relativement simple à réaliser.

En effet, les efforts exercés sur le dispositif de fixation lors d'un crash peuvent tendre à séparer le premier moyen d'aimantation et le deuxième moyen d'aimantation d'un ensemble de fixation. Le panneau s'écarte alors de la structure porteuse jusqu'à une position ouverte atteinte lorsque le lien de sécurité est tendu.

L'enrouleur est par exemple mobile en translation selon le premier axe longitudinal du plot mobile en étant agencé autour d'un moyen de guidage d'un carter du plot mobile, cet enrouleur étant accolé par un organe ressort contre le moyen de déplacement pour être solidaire en translation du moyen d'aimantation du plot mobile.

De plus, ce carter peut comporter au moins un cran coopérant avec la face crantée de l'enrouleur pour empêcher une rotation l'enrouleur selon un sens de rotation d'évidement permettant l'évidement du lien de sécurité, lorsque le moyen d'aimantation est dans sa position d'engagement.

Lors du verrouillage du panneau, le premier moyen d'aimantation et l'enrouleur sont dans leur position d'engagement. La face crantée de l'enrouleur est alors en prise sur au moins un cran du carter. Ce cran interdit alors une rotation de l'enrouleur tendant à dévider le lien de sécurité. La longueur du lien de sécurité entre le plot mobile et le plot fixe est ainsi fixe dans cette position d'engagement.

Par contre, dans la position de désengagement, il est possible de dérouler le lien de sécurité, l'enrouleur n'étant pas solidaire en rotation du moyen d'aimantation. Cette caractéristique permet la réalisation d'actions de maintenance.

Par suite, l'enrouleur est finalement bloqué en rotation, sauf lorsqu'une action volontaire induit le déplacement du premier moyen d'aimantation du plot mobile vers le centre du premier carter du plot mobile. Lors de cette action volontaire, le lien de sécurité de sécurité peut être déroulé, notamment pour pouvoir emmancher la broche à billes dans le réceptacle dédié du plot fixe. Par contre en cas de crash, l'enrouleur est bloqué par des dents de crabot du premier carter pour retenir le panneau, en cas de séparation des moyens d'aimantation.

En outre, ledit réceptacle peut être traversé par un doigt d'une crémaillère en prise sur le moyen de déplacement du plot fixe en l'absence de la broche à billes, le moyen d'aimantation du plot fixe étant dans la position de désengagement en l'absence de la broche à billes.

Cette caractéristique oblige un opérateur à fixer la broche à billes d'un plot mobile à un plot fixe pour pouvoir solidariser le plot mobile au plot fixe. La sécurité du dispositif de fixation est ainsi optimisée.

Par ailleurs, l'enrouleur peut comporter un ressort de rappel tendant à engendrer une rotation de l'enrouleur selon un sens de rotation d'enroulement pour enrouler le lien de sécurité autour de l'enrouleur.

Lors de la fermeture du panneau, le lien de sécurité se rembobine automatiquement grâce au ressort de rappel de l'enrouleur.

Par ailleurs, le plot mobile comportant une crémaillère dite « première crémaillère » coopérant avec le moyen de déplacement du plot mobile dit « premier moyen de déplacement », cette première crémaillère étant mobile entre une première position mettant le moyen d'aimantation du plot mobile dans la position d'engagement et une deuxième position mettant le moyen d'aimantation du plot mobile dans la position de désengagement, ledit plot mobile comporte un premier organe ressort exerçant un effort tendant à positionner la première crémaillère dans la première position. Seule une action volontaire peut alors conduire à positionner le premier moyen d'aimantation dans sa position de désengagement pour optimiser la sécurité du dispositif de fixation.

Le plot fixe comportant une crémaillère dite « deuxième crémaillère » coopérant avec le moyen de déplacement du plot fixe dit « deuxième moyen de déplacement », cette deuxième crémaillère étant mobile entre un premier emplacement mettant le moyen d'aimantation du plot fixe dans la position d'engagement et un deuxième emplacement mettant le moyen d'aimantation du plot fixe dans la position de désengagement, ledit plot fixe peut comporter un deuxième organe ressort exerçant un effort tendant à positionner la deuxième crémaillère à son deuxième emplacement. Seule une action volontaire peut alors conduire à positionner le deuxième moyen d'aimantation dans sa position d'engagement pour optimiser la sécurité du dispositif de fixation, par exemple en obligeant l'insertion d'une broche à billes.

Selon une réalisation, le plot mobile peut alors comporter un premier moyen d'aimantation portée par un premier moyen de déplacement, ce premier moyen de déplacement comportant un bras relié au premier moyen d'aimantation ainsi qu'une première base et une première vis sans fin s'étendant entre le premier moyen d'aimantation et la première base en traversant un premier écrou fixe, ladite première base comportant des crans en prise avec une première crémaillère, ledit plot mobile ayant un enrouleur autour duquel est enroulé un lien de sécurité portant une broche à billes, ledit enrouleur étant mobile en translation selon ledit premier axe longitudinal du plot mobile et étant poussé par un organe ressort contre ledit premier moyen de déplacement pour être solidaire en translation du moyen d'aimantation du plot mobile, ledit enrouleur comportant une face crantée en prise avec au moins un cran d'un carter du plot mobile dans la position d'engagement.

De plus, le plot fixe peut comporter un deuxième moyen d'aimantation porté par un deuxième moyen de déplacement, ce deuxième moyen de déplacement comportant un bras relié au deuxième moyen d'aimantation ainsi qu'une deuxième base et une deuxième vis sans fin s'étendant entre la deuxième rotule et la deuxième base en traversant un deuxième écrou fixe, ladite deuxième base comportant des crans en prise avec une deuxième crémaillère, ladite deuxième crémaillère ayant un réceptacle dans lequel peut être emmanchée une broche à billes du plot mobile.

Préalablement à la fixation du panneau à une structure, le deuxième moyen d'aimantation est en retrait au sein du plot fixe, à savoir dans sa position de désengagement. De même, le premier moyen d'aimantation est en retrait au sein du plot mobile, à savoir dans sa position de désengagement.

L'opérateur positionne alors le panneau par rapport à la structure, par exemple en le faisant pivoter par le biais d'une articulation à pivot.

L'opérateur insère alors la broche à billes dans le réceptacle du plot fixe. Cette insertion induit le déplacement de la deuxième crémaillère et par suite la translation du deuxième moyen d'aimantation vers l'extérieur du plot fixe.

Cette opération est possible car l'enrouleur n'est plus alors en prise avec des crans du carter mobile. Dès lors, l'opérateur peut tirer sur le lien de sécurité pour le dérouler et enficher la broche à billes dans le plot fixe.

L'opérateur déplace alors le panneau pour rapprocher le plot mobile du plot fixe. Le premier moyen d'aimantation étant en retrait dans le premier carter, le premier moyen d'aimantation n'entre pas en contact avec le deuxième moyen d'aimantation ce qui peut éviter un « claquage » de ou des aimants.

L'opérateur déplace ensuite le premier moyen d'aimantation en le rapprochant du deuxième moyen d'aimantation en manoeuvrant la première crémaillère ou à l'aide d'un outil.

Ce déplacement longitudinal vers l'extérieur du premier carter induit aussi le déplacement de l'enrouleur vers les crans du premier carter.

Lorsque le premier moyen d'aimantation atteint sa position d'engagement, ce premier moyen d'aimantation est fortement aimanté au deuxième moyen d'aimantation. De plus, l'enrouleur est en prise sur les crans du premier carter.

Pour démonter le panneau, l'opérateur peut réaliser les étapes précédentes dans l'ordre inverse.

Par ailleurs, le dispositif de fixation peut comporter un organe en élastomère interposé entre le moyen d'aimantation d'un plot et un carter de ce plot soit entre une rotule et ledit carter soit en étant interposé entre le moyen de déplacement et ledit carter.

Chaque plot concerné comporte un moyen amortissant des vibrations, à savoir l'organe en élastomère qui découple la rotule du carter.

Eventuellement, une molette filetée est utilisée pour pré-contraindre l'élastomère afin de modifier sa raideur pour l'adapter en fonction du système considéré. Cette molette permet de régler l'amortissement du moyen amortissant après des essais en vol, sans avoir à changer la définition du système.

Outre un dispositif de fixation, l'invention vise un aéronef muni d'une structure et d'au moins un panneau d'habillage. Cet aéronef comporte alors au moins un dispositif de fixation selon l'invention.

L'invention et ses avantages apparaîtront avec plus de détails dans le cadre de la description qui suit avec des exemples donnés à titre illustratif en référence aux figures annexées qui représentent :
- la figure 1, une coupe d'un aéronef muni d'un panneau fixé à une structure au travers d'un dispositif de fixation selon l'invention,
- la figure 2, une vue schématique d'un ensemble de fixation,
- la figure 3, une coupe d'un plot mobile montrant sa première crémaillère,
- la figure 4, une coupe d'un plot fixe montrant sa deuxième crémaillère,
- la figure 5, un plot mobile dans une position de désengagement obtenue en déplaçant la première crémaillère avec une commande à câble,
- la figure 6, un plot mobile dans une position de désengagement obtenue à l'aide d'un outil,
- les figures 7 à 10, des vues explicitant la solidarisation d'un plot mobile à un plot fixe, et
- les figures 11 à 12, des vues explicitant le fonctionnement en cas de crash notamment d'un dispositif de fixation muni d'un système de tenue au crash.

Les éléments présents dans plusieurs figures distinctes sont affectés d'une seule et même référence.

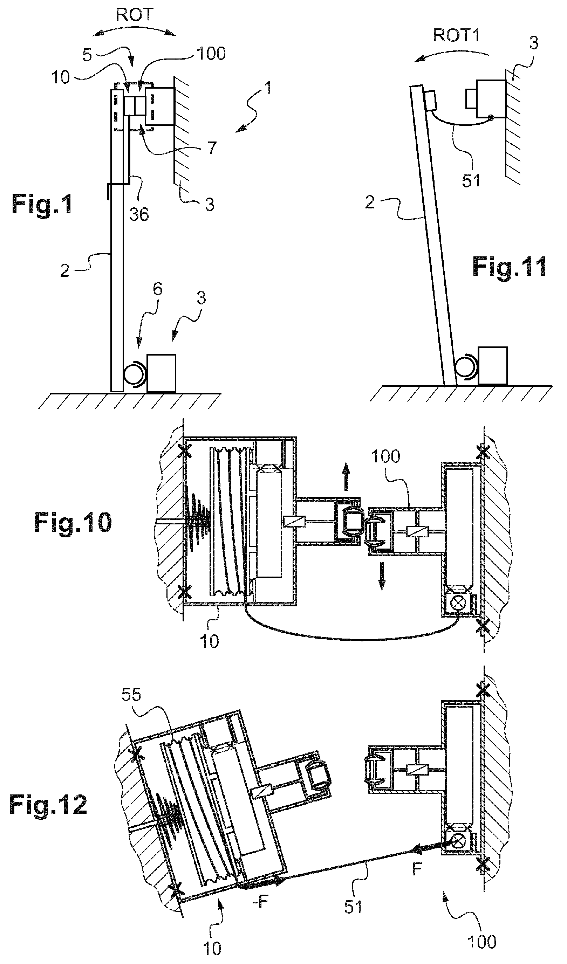

La figure 1 présente un aéronef 1 comprenant au moins un panneau 2 à fixer à une structure 3. Par exemple, un panneau 2 d'habillage doit être fixé à une structure délimitant au moins partiellement une cabine.

Dès lors, l'aéronef 1 est muni d'un dispositif de fixation 5.

Ce dispositif de fixation 5 comporte au moins un ensemble de fixation 7 pour fixer de façon réversible le panneau 2 à la structure 3. Un tel ensemble de fixation 7 inclut alors un plot mobile 10 fixé au panneau 2 ainsi qu'un plot fixe 100 fixé à la structure 3 par des moyens usuels.

Par ailleurs, le dispositif de fixation 5 présenté comporte au moins une articulation à pivot 6. Cette articulation à pivot 6 comprend une partie fixée à la structure 3 et une partie fixée au panneau 2 pour autoriser une rotation ROT du panneau 2 par rapport à la structure 3.

Par exemple, au moins un ensemble de fixation se trouve dans une section supérieure du panneau, alors qu'au moins une articulation à pivot est située au pied du panneau 2.

A titre de variante, le dispositif de fixation comporte une pluralité d'ensembles de fixation mais est dépourvu d'articulation à pivot.

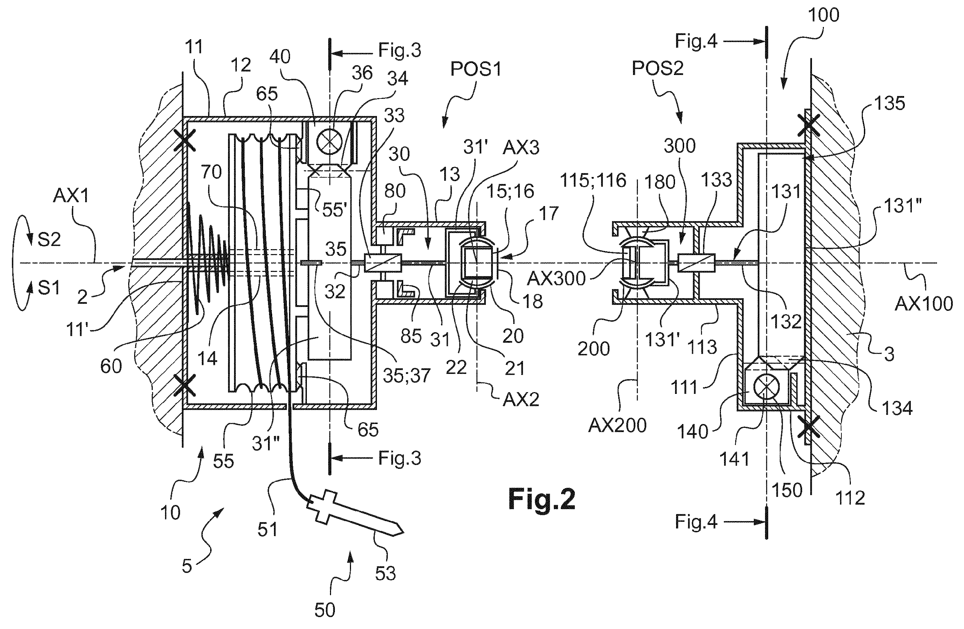

En référence à la figure 2, chaque plot comporte un moyen d'aimantation 15, 115 pour adhérer l'un à l'autre de manière réversible. Plus précisément, au moins un moyen d'aimantation comporte un aimant 16, l'autre moyen d'aimantation d'un ensemble de fixation 7 comportant soit un autre aimant soit une plaque métallique sensible à un champ magnétique.

En outre, chaque moyen d'aimantation présente une face de liaison destinée à être aimantée à l'autre moyen d'aimantation. Dès lors, au moins une face de liaison peut être recouverte d'un organe antifriction 18 usuel.

Par exemple, le moyen d'aimantation dit « premier moyen d'aimantation 15 » du plot mobile est un aimant 16 recouvert d'un organe antifriction 18. Le moyen d'aimantation dit «deuxième moyen d'aimantation 115 » du plot fixe inclut alors par exemple une plaque métallique 116.

Par ailleurs, chaque plot 10, 100 comporte un carter. Ce carter peut être décomposé en une partie arrière 12, 112 fixée soit au panneau soit à la structure 3 porteuse, et une partie avant 13, 113 en regard de l'autre partie avant.

Par suite, le plot mobile comporte un premier carter 11 muni d'une première partie arrière 12 fixée au panneau 2 et d'une première partie avant 13. Le plot fixe comporte un deuxième carter 111 muni d'une deuxième partie arrière 112 fixée à la structure 3 et d'une deuxième partie avant 113 en regard de la première partie avant 13.

Au moins un plot comporte en outre une rotule 20, 200 agencée dans la partie avant du plot. Chaque rotule porte le moyen d'aimantation 15, 115 associé pour lui laisser trois degrés de liberté en rotation autour d'un axe longitudinal AX1, AX100 du plot traversant le panneau et la structure, mais aussi autour d'un axe transversal AX3, AX300 et d'un axe en élévation AX2, AX200 sensiblement parallèle au panneau et à la structure.

Les axes longitudinaux AX1, AX100 des plots mobile 15 et fixe 115 d'un ensemble de fixation sont dénommés respectivement premier axe longitudinal AX1 et deuxième axe longitudinal AX100. Le premier axe longitudinal est sensiblement orthogonal au panneau 2, le deuxième axe longitudinal AX100 étant sensiblement orthogonal à la structure 3.

Le premier axe longitudinal AX1 et le deuxième axe longitudinal AX100 sont parallèles et coaxiaux en l'absence de décalage indu lorsque les plots sont solidarisés l'un à l'autre. Cette absence de décalage est toutefois théorique. Dès lors, on verra par la suite que l'invention permet d'autoriser un tel décalage.

Par ailleurs, chaque plot comporte un moyen de déplacement portant un moyen d'aimantation, au travers d'une rotule le cas échéant. Le moyen de déplacement confère un degré de liberté en translation au moyen d'aimantation du plot le long de l'axe longitudinal correspondant. Plus précisément, chaque moyen d'aimantation peut être translaté dans le carter du plot d'une position d'engagement vers une position de désengagement.

Les moyens d'aimantation 15, 155 du plot mobile et du plot fixe sont fortement aimantés l'un à l'autre lorsqu'ils sont en vis-à-vis et chacun dans la position d'engagement POS1, et n'étant pas aimantés ou faiblement aimantés lorsqu'au moins un moyen d'aimantation 15, 115 est dans sa position de désengagement POS2. Dans la position d'engagement, un moyen d'aimantation saille longitudinalement du carter du plot associé.

Un tel moyen de déplacement peut comporter un bras 31 , 131 portant directement un moyen d'aimantation, ou portant la rotule 20, 200 du plot. Par exemple, le bras porte une cage externe 22 de la rotule dans laquelle une bille 21 tronquée portant le moyen d'aimantation est libre en rotation.

Ce bras 31, 131 inclut une vis sans fin 32, 132 en prise avec un écrou 33, 133 attaché directement ou indirectement au carter du plot 10, 100 concerné.

De plus, le moyen de déplacement 30, 300 est pourvu d'un moyen d'entraînement 35, 135 pour mettre en rotation le bras 31, 131 afin de générer sa translation.

Par exemple, chaque bras 31, 131 s'étend longitudinalement d'une extrémité distale 31',131' portant un moyen d'aimantation le cas échéant par une rotule, vers une extrémité proximale 31", 131" " munie d'une base crantée 31 ", 131 ". Le moyen d'entraînement 35, 135 inclut alors une crémaillère 40, 140 mobile transversalement qui est en prise avec un cran 34, 134 d'une périphérie de la base 31", 131" du moyen de déplacement.

Par exemple, le plot mobile 10 comporte un premier moyen d'aimantation 15 porté par un premier bras, via une rotule dite « première rotule 20 » selon l'exemple représenté.

Cette première rotule 20 est fixée à un moyen de déplacement dit « premier moyen de déplacement 30 ». Plus précisément, un bras dit « premier bras 31 » du premier moyen de déplacement porte la première rotule 20 à sa première extrémité distale. Par exemple, le premier bras comporte une fourche fixée à une cage externe de la première rotule.

De plus, le premier bras porte une base dite « première base 31"» à sa première extrémité proximale. Le premier bras comprend alors, entre sa première extrémité distale et sa première extrémité proximale, une première vis sans fin 32 traversant un premier écrou 33 fixe par rapport au premier bras.

La première base 31" comporte à sa périphérie des crans 34 en prise avec une crémaillère dite « première crémaillère 40 ».

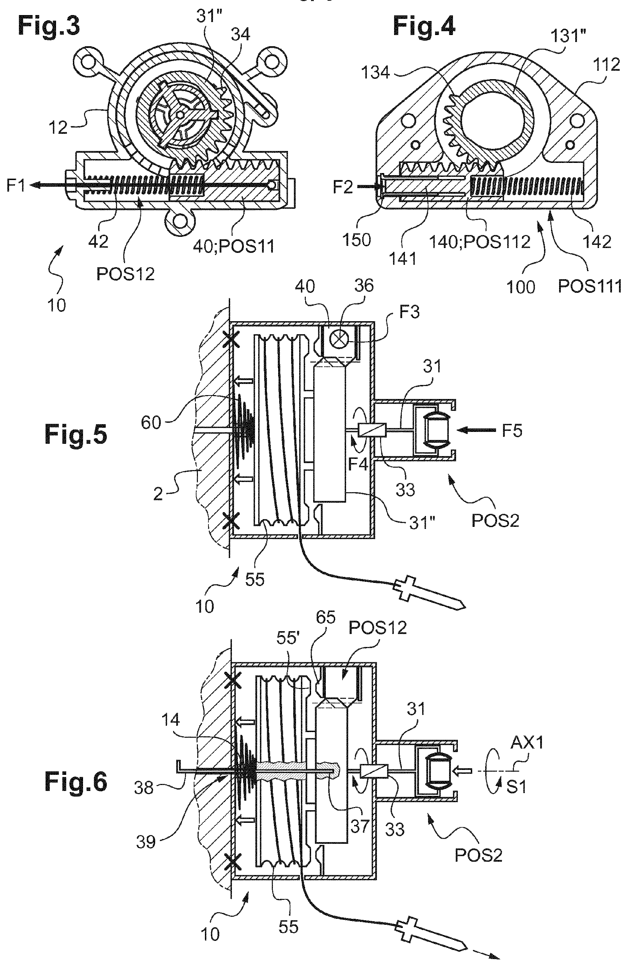

En référence à la figure 3, un premier organe ressort 42 peut être agencé entre le premier carter et la première crémaillère 40. Ce premier organe ressort tend à positionner la première crémaillère 40 dans une première position POS11 visible sur la figure 3 qui entraîne le positionnement du premier moyen d'aimantation dans la position d'engagement de la figure 1.

En s'opposant à ce premier organe ressort, on déplace la première crémaillère 40 selon la flèche F1 vers une deuxième position POS12 engendrant le positionnement du premier moyen d'aimantation dans la position de désengagement.

En référence à la figure 1, le moyen d'entraînement du plot mobile 10 peut comprendre un câble 36 solidaire de la première crémaillère du plot mobile.

Ce moyen d'entraînement peut comprendre en complément ou de manière alternative un outil 38 de vissage/dévissage coopérant avec un orifice 37 du moyen de déplacement.

Par exemple, l'outil 38 peut être inséré dans un orifice du bras 31 du plot mobile, et notamment de sa base 31 ".

Dès lors, le premier carter 11 du plot mobile et notamment sa première partie arrière 12 peuvent comprendre un passage 39 guidant l'outil vers l'orifice 37.

Un déplacement du câble 36 et/ou une rotation de l'outil 38 induit alors une rotation du premier bras, cette rotation engendrant la translation du premier bras au sein du premier carter 11.

Par ailleurs, le plot fixe 100 comporte un deuxième moyen d'aimantation 115 porté une deuxième extrémité distale d'un deuxième bras, via une rotule dite « deuxième rotule 200 » par exemple.

De plus, le deuxième bras porte une base dite « deuxième base 131" » à sa deuxième extrémité proximale. Le deuxième bras comprend alors, entre sa deuxième extrémité distale et sa deuxième extrémité proximale, une deuxième vis sans fin 132 traversant un deuxième écrou 133 fixe par rapport au premier bras.

La deuxième base 131" comporte à sa périphérie des crans dit « deuxième crans 134 » en prise avec une crémaillère dite « deuxième crémaillère 140 ».

En référence à la figure 4, un deuxième organe ressort 142 peut être agencé entre le deuxième carter et la deuxième crémaillère 140. Ce deuxième organe ressort tend à positionner la deuxième crémaillère 140 dans un deuxième emplacement POS112 visible sur la figure 4 qui entraîne le positionnement du deuxième moyen d'aimantation dans la position de désengagement de la figure 1.

En s'opposant à ce deuxième organe ressort, on déplace la deuxième crémaillère 140 selon la flèche F2 vers un premier emplacement POS111 engendrant le positionnement du deuxième moyen d'aimantation dans la position d'engagement.

Par ailleurs et en référence à la figure 2, l'ensemble de fixation peut comporter un système de tenue au crash 50.

Ce système de tenue au crash 50 inclut un lien de sécurité 51 qui est enroulé autour d'un enrouleur 55, par exemple autobloquant, du plot mobile 10. Le lien de sécurité s'étend alors d'un tronçon fixé à l'enrouleur vers un tronçon portant une broche à billes 53.

Cette broche à billes est insérable de manière réversible et manuelle dans un réceptacle 150 solidaire du deuxième carter 111 du plot fixe 100.

Plus précisément, le réceptacle 150 est traversé par un doigt 141 de la deuxième crémaillère 140 du plot fixe 100 en l'absence de la broche à billes 53. Le deuxième moyen d'aimantation 115 du plot fixe 100 est alors dans la position de désengagement POS2. La figure 4 montre un tel agencement du doigt 141 dans le réceptacle 150.

Par contre, lorsque la broche à billes 53 est logée dans le réceptacle 150, cette broche à billes 53 pousse la deuxième crémaillère selon la flèche F2. Le deuxième moyen d'aimantation 115 du plot fixe 100 est alors déplacé dans la position d'engagement.

Par suite, la broche à billes représente un moyen d'entraînement apte à mettre en mouvement la deuxième crémaillère.

Par ailleurs et en référence à la figure 2, l'enrouleur 55 est mobile en translation selon le premier axe longitudinal AX1 du plot mobile 10. Par exemple, cet enrouleur 55 est agencé à cet effet autour d'un moyen de guidage 14 du premier carter 11. L'enrouleur est alors mobile en translation mais aussi en rotation autour du premier axe longitudinal AX1 dans la première partie arrière 12 du premier carter 11.

Cet enrouleur 55 peut être plaqué par un organe ressort 60 contre le moyen de déplacement 30 pour être solidaire en translation du premier moyen d'aimantation 15 du plot mobile 10. L'organe ressort 60 peut être un ressort conique fixé à un fond 11' du premier carter qui est solidaire du panneau 2.

De plus, le premier carter 11 peut comporter au moins un cran 65 en prise avec une face crantée 55' de l'enrouleur 55 dans la position d'engagement POS1. Dans cette position, chaque cran 65 du carter empêche l'enrouleur 55 d'effectuer une rotation selon un sens de rotation d'évidement S1 permettant l'évidement du lien de sécurité 51 hors de l'enrouleur.

Par contre, la translation de l'enrouleur vers la position de dégagement éloigne la face crantée 55' des crans du premier carter. Ainsi la face crantée de l'enrouleur représente la face de l'enrouleur en regard du premier moyen d'aimantation.

Par ailleurs, l'enrouleur 55 comporte éventuellement un ressort de rappel 70 tendant à engendrer une rotation de l'enrouleur selon un sens de rotation d'enroulement S2 pour enrouler le lien de sécurité 51 autour de cet enrouleur 55.

Par ailleurs, le dispositif de fixation 5 schématisé comporte au moins un organe en élastomère 80, 180 interposé directement ou indirectement entre une rotule 20, 200 d'un plot 10, 100 et un carter 11, 111 de ce plot 10, 100.

Par exemple, le plot mobile comporte un premier organe en élastomère interposé indirectement entre la première rotule 20 et le premier carter 11, en étant agencé entre le premier écrou et le premier carter. Une rondelle 85 vissée permet de pré-contraindre le premier organe en élastomère.

On comprend que le premier carter du plot mobile présente un accès à la rondelle 85. Par exemple, la partie avant 13 du premier carter du plot mobile est raccourcie, la rondelle saillant de cette partie avant pour être manipulée par un opérateur.

Le plot fixe schématisé comporte un deuxième organe en élastomère 180 interposé directement entre la deuxième rotule 120 et le deuxième carter 11. Ce deuxième organe en élastomère 180 n'est toutefois pas solidaire de la deuxième rotule 120 pour permettre le coulissement de cette deuxième rotule.

Cet agencement n'est pas limitatif. Le plot fixe peut par exemple comprendre un organe en élastomère interposé indirectement entre la deuxième rotule et le deuxième carter 111, en étant agencé entre le deuxième écrou et le deuxième carter

Les figures 2, 5 à 12 explicitent le fonctionnement du dispositif de fixation.

En référence à la figure 2, avant la connexion du plot mobile 10 au plot fixe 100, le plot mobile se trouve dans sa position d'engagement. L'enrouleur, le premier bras, la première rotule et le premier moyen d'aimantation sont chacun positionnés le plus loin possible du panneau 2.

A l'inverse, le plot fixe se trouve dans sa position de désengagement. Le deuxième bras, la deuxième rotule et le deuxième moyen d'aimantation sont chacun positionnés le plus prêt possible de la structure 3.

Un opérateur déplace alors les organes mobiles du plot mobile vers leur position de désengagement.

Selon la figure 5, l'opérateur manoeuvre le câble 36 ce qui induit une translation de la première crémaillère 40 selon la flèche F3.

Cette translation génère une rotation du premier bras 31 selon la flèche F4. La présence du premier écrou induit par conséquent la translation du premier bras, de la première rotule et du premier moyen d'aimantation selon la flèche F5. La première base 31" exerce un effort sur l'enrouleur 55 permettant le déplacement longitudinale de cet enrouleur en compressant l'organe ressort 60.

L'enrouleur, le premier bras, la première rotule et le premier moyen d'aimantation sont chacun positionnés dans la position de désengagement le plus près possible du panneau 2.

De même, les organes mobiles du plot fixe correspondant sont dans la position de désengagement.

Selon une méthode alternative schématisée sur la figure 6, l'opérateur insère l'outil 38 au travers du panneau 2 dans le plot mobile. A l'aide de cet outil, l'opérateur met alors directement en rotation le premier bras.

Dès lors et en référence à la figure 5, l'opérateur pousse le panneau 2 pour le rapprocher de la structure 3.

L'opérateur saisit ensuite la broche à billes 53 pour l'insérer dans le réceptacle du plot fixe. L'enrouleur 55 n'étant pas bloqué par les crans 65 du premier carter, cet opérateur peut en effet dérouler le lien de sécurité pour manoeuvrer la broche à billes.

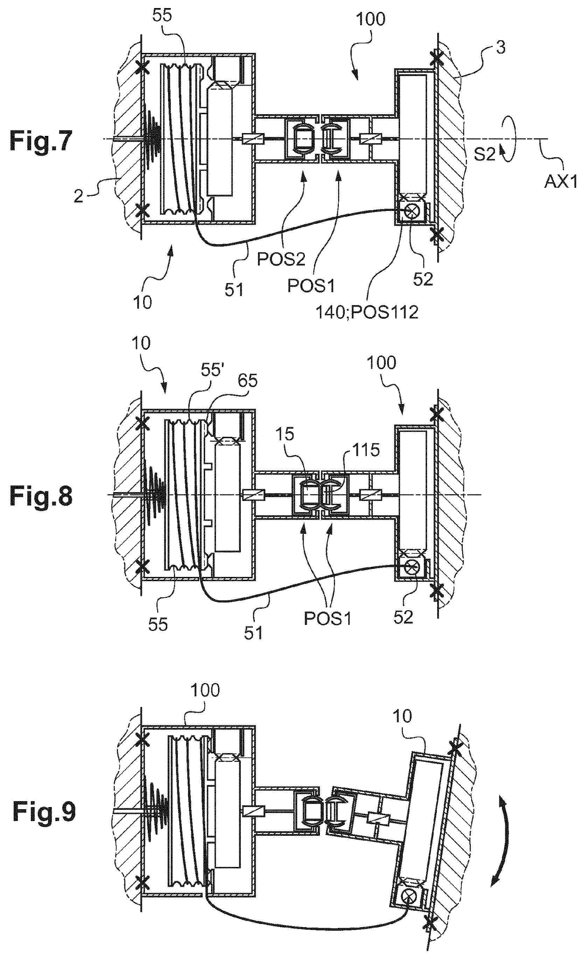

L'insertion de la broche à billes dans le réceptacle provoque le déplacement du deuxième bras, de la deuxième rotule et du deuxième moyen d'aimantation vers leur position d'engagement représentée sur la figure 7.

Par contre, le premier moyen d'aimantation reste dans sa position de désengagement.

En relâchant le lien de sécurité, l'opérateur permet à l'organe ressort de mettre en rotation l'enrouleur pour rembobiner le lien de sécurité. Le plot mobile s'accole alors au plot fixe.

En référence à la figure 8, l'opérateur utilise alors un moyen d'entraînement du plot mobile pour accoler le premier moyen d'aimantation 15 contre le deuxième moyen d'aimantation 115 du plot fixe.

Le plot mobile est alors aimanté au plot fixe ce qui permet de de fixer le panneau 2 à la structure 3.

Il est à noter que si la broche à billes n'est pas insérée dans le plot fixe, cette aimantation est de fait impossible. En effet, en l'absence de la broche à billes, les organes mobiles du plot fixe sont dans la position de désengagement. Cette caractéristique est intéressante d'un point de vue sécuritaire.

En référence à la figure 9, l'agencement des moyens d'aimantation sur au moins une rotule permet d'autoriser un décalage angulaire entre le panneau 2 et la structure 3.

De même et en référence à la figure 10, cet agencement permet d'autoriser un décalage axial entre le panneau 2 et la structure 3.

En cas de crash par exemple et en référence à la figure 11, le pouvoir d'aimantation des moyens d'aimantation des plots mobile et fixe peut s'avérer insuffisant pour maintenir le panneau contre la structure 3.

Ce panneau pivote alors par rapport à la structure 3. Toutefois, l'enrouleur du plot mobile étant bloqué par le premier carter, ce mouvement rotatif est interrompu par le lien de sécurité 51.

En référence à la figure 12, Les efforts d'interface F exercés sur le dispositif de fixation sont calculables analytiquement, leurs directions et leurs valeurs étant connues.

La justification par calcul de la tenue de la fixation en cas de crash est alors facilitée.

## Revendications

1. Dispositif de fixation (5) pour fixer un panneau (2) à une structure (3), ce dispositif de fixation (5) étant muni d'au moins un ensemble de fixation (7) réversible comprenant un plot mobile (10) apte à être fixé au panneau (2) et un plot fixe (100) apte à être fixé à la structure (3), ledit plot mobile (10) comportant un premier moyen d'aimantation (15) coopérant avec un deuxième moyen d'aimantation (115) dudit plot fixe (100), au moins un desdits premier moyen d'aimantation (15) et deuxième moyen d'aimantation (115) comportant un aimant (16),
**caractérisé en ce qu'**au moins un moyen d'aimantation (15, 115) est porté par une rotule (20, 200) du plot associé, chaque moyen d'aimantation (15, 115) étant solidaire en translation d'un moyen de déplacement (30, 300) pour être déplacé en translation le long d'un axe longitudinal (AX1, AX100) du plot associé d'une position d'engagement (POS1) à une position de désengagement (POS2) de manière réversible, l'axe longitudinal (AX1) du plot mobile étant dit « premier axe longitudinal » et étant sensiblement parallèle à l'axe longitudinal (AX100) du plot fixe dit « deuxième axe longitudinal », les moyens d'aimantation (15, 155) étant fortement aimantés l'un à l'autre lorsqu'ils sont en vis-à-vis et chacun dans la position d'engagement (POS1) et n'étant pas aimantés ou faiblement aimantés lorsqu'au moins un moyen d'aimantation (15, 115) est dans sa position de désengagement (POS2).

2. Dispositif selon la revendication 1,
**caractérisé en ce que** le dispositif de fixation (5) comporte au moins une articulation à pivot (6) apte à être fixée au panneau (2) et à ladite structure (3) pour autoriser une rotation (ROT) du panneau (2) par rapport à la structure (3).

3. Dispositif selon l'une quelconque des revendications 1 à 2,
**caractérisé en ce que** soit chaque moyen d'aimantation (15, 115) comporte un aimant (16), soit un moyen d'aimantation (15) comporte un aimant (16) et l'autre moyen d'aimantation (115) comporte une plaque métallique (116).

4. Dispositif selon l'une quelconque des revendications 1 à 3,
**caractérisé en ce qu'**au moins un moyen d'aimantation (15) comportant une face dite « face de liaison (17) » à aimanter à l'autre moyen d'aimantation (115), ladite face de liaison (17) est recouverte d'un organe antifriction (18).

5. Dispositif selon l'une quelconque des revendications 1 à 4,
**caractérisé en ce qu'**au moins un plot (10, 100) comporte un moyen de déplacement (30, 300) muni d'un bras (31, 131), ledit bras (31, 131) comprenant une vis sans fin (32, 132) engagée dans un écrou (33, 133) attaché à un carter du plot (10, 100), ledit moyen de déplacement (30, 300) étant pourvu d'un moyen d'entraînement (35, 135) pour mettre en rotation ledit bras (31, 131) afin d'induire la translation de ce bras (31, 131).

6. Dispositif selon la revendication 5,
**caractérisé en ce que** ledit bras (31, 131) s'étend longitudinalement d'une extrémité (31',131') reliée à un moyen d'aimantation vers une extrémité (31 ", 131 ") munie d'une base crantée, ledit moyen d'entraînement (35, 135) comportant une crémaillère (40, 140) mobile transversalement, une périphérie de ladite base (31 ", 131 ") étant au moins partiellement crantée en comportant au moins un cran (34, 134) en prise avec ladite crémaillère (40, 140).

7. Dispositif selon la revendication 6,
**caractérisé en ce que** ledit moyen d'entraînement (35) du plot mobile (10) comporte un câble (36) solidaire de ladite crémaillère (40).

8. Dispositif selon l'une quelconque des revendications 5 à 7,
**caractérisé en ce que** ledit moyen d'entraînement (35) du plot mobile (10) comporte un orifice (37) du bras (31) apte à accueillir la tête d'un outil de vissage/dévissage (38), un carter (11) dudit plot mobile (10) comprenant un passage (39) pour guider un tel outil (38) vers ledit orifice (37).

9. Dispositif selon l'une quelconque des revendications 1 à 8,
**caractérisé en ce que** ledit dispositif de fixation (5) comporte un système de tenue au crash (50) muni d'un lien de sécurité (51) enroulé autour d'un enrouleur (55) autobloquant dudit plot mobile (10), ledit lien de sécurité (51) portant une broche à billes (53) insérable de manière réversible et manuelle dans un réceptacle (150) dudit plot fixe (100).

10. Dispositif selon la revendication 9,
**caractérisé en ce que** ledit enrouleur (55) est mobile en translation selon ledit premier axe longitudinal (AX1) du plot mobile (10) en étant agencé autour d'un moyen de guidage (14) d'un carter (11) dudit plot mobile (10), ledit enrouleur (55) étant accolé par un organe ressort (60) contre ledit moyen de déplacement (30) pour être solidaire en translation du moyen d'aimantation (15) du plot mobile (10).

11. Dispositif selon l'une quelconque des revendications 9 à 10,
**caractérisé en ce que** ledit carter (11) comporte au moins un cran (65) coopérant avec une face crantée (55') de l'enrouleur (55) pour empêcher une rotation de l'enrouleur (55) selon un sens de rotation d'évidement (S1) permettant l'évidement dudit lien de sécurité (51), lorsque le moyen d'aimantation est dans sa position d'engagement (POS1).

12. Dispositif selon l'une quelconque des revendications 9 à 11,
**caractérisé en ce que** ledit réceptacle (150) est traversé par un doigt (141) d'une crémaillère (140) en prise sur le moyen de déplacement (300) du plot fixe (100) en l'absence de la broche à billes (53), ledit moyen d'aimantation (115) du plot fixe (100) étant dans la position de désengagement (POS2) en l'absence de la broche à billes (53).

13. Dispositif selon l'une quelconque des revendications 9 à 12,
**caractérisé en ce que** ledit enrouleur (55) comporte un ressort de rappel (70) tendant à engendrer une rotation de l'enrouleur selon un sens de rotation d'enroulement (S2) pour enrouler ledit lien de sécurité (51) autour de l'enrouleur (55).

14. Dispositif selon l'une quelconque des revendications 1 à 13,
**caractérisé en ce que** ledit plot mobile (10) comportant une crémaillère dite « première crémaillère (40) » coopérant avec le moyen de déplacement du plot mobile dit « premier moyen de déplacement (30) », cette première crémaillère (40) étant mobile entre une première position (POS11) mettant le moyen d'aimantation (15) du plot mobile (10) dans la position d'engagement (POS1) et une deuxième position (POS12) mettant le moyen d'aimantation (15) du plot mobile (10) dans la position de désengagement (POS2), ledit plot mobile (10) comporte un premier organe ressort (42) exerçant un effort tendant à positionner la première crémaillère (40) dans la première position (POS11).

15. Dispositif selon l'une quelconque des revendications 1 à 14,
**caractérisé en ce que** ledit plot fixe (100) comportant une crémaillère dite « deuxième crémaillère (140) » coopérant avec le moyen de déplacement du plot fixe dit « deuxième moyen de déplacement (300) », cette deuxième crémaillère (140) étant mobile entre un premier emplacement (POS111) mettant le moyen d'aimantation (115) du plot fixe (100) dans la position d'engagement (POS1) et un deuxième emplacement (POS112) mettant le moyen d'aimantation (115) du plot fixe (100) dans la position de désengagement (POS2), ledit plot fixe (100) comporte un deuxième organe ressort (142) exerçant un effort tendant à positionner la deuxième crémaillère (140) à son deuxième emplacement (POS112).

16. Dispositif selon l'une quelconque des revendications 1 à 15,
**caractérisé en ce que** le plot mobile (10) comporte un premier moyen d'aimantation (15) portée par un premier moyen de déplacement (30), ce premier moyen de déplacement (30) comportant un bras (31) relié au premier moyen d'aimantation ainsi qu'une première base (31 ") et une première vis sans fin (32) s'étendant entre le premier moyen d'aimantation et la première base (31") en traversant un premier écrou (33) fixe, ladite première base (31") comportant des crans (34) en prise avec une première crémaillère (40), ledit plot mobile (10) ayant un enrouleur (55) autour duquel est enroulé un lien de sécurité (51) portant une broche à billes (53), ledit enrouleur (55) étant mobile en translation selon ledit premier axe longitudinal (AX1) du plot mobile (10) et étant poussé par un premier organe ressort (42) contre ledit premier moyen de déplacement (30) pour être solidaire en translation du premier moyen d'aimantation (15) du plot mobile (10), ledit enrouleur (55) comportant une face crantée (55') en prise avec au moins un cran (65) d'un carter (11) du plot mobile (10) dans la position d'engagement (POS1).

17. Dispositif selon l'une quelconque des revendications 1 à 16,
**caractérisé en ce que** le plot fixe (100) comporte un deuxième moyen d'aimantation (115) portée par un deuxième moyen de déplacement (300), ce deuxième moyen de déplacement (300) comportant un bras (131) relié au deuxième moyen d'aimantation ainsi qu'une deuxième base (131 ") et une deuxième vis sans fin (132) s'étendant entre la deuxième rotule (200) et la deuxième base (131 ") en traversant un deuxième écrou (133) fixe, ladite deuxième base (131") comportant des crans (134) en prise avec une deuxième crémaillère (140), ladite deuxième crémaillère (140) ayant un réceptacle (150) dans lequel peut être emmanchée une broche à billes (53) du plot mobile (10).

18. Dispositif selon l'une quelconque des revendications 1 à 17,
**caractérisé en ce que** le dispositif de fixation (5) comporte un organe en élastomère (80, 180) interposé entre le moyen d'aimantation d'un plot (10, 100) et un carter (11, 111) de ce plot (10, 100) soit entre une rotule et ledit carter soit en étant interposé entre le moyen de déplacement (30, 300) et ledit carter (11, 111).

19. Dispositif selon l'une quelconque des revendications 1 à 18,
**caractérisé en ce que** chaque moyen d'aimantation est porté par une rotule.

20. Aéronef (1) muni d'une structure et d'au moins un panneau d'habillage,
**caractérisé en ce que** cet aéronef (1) comporte au moins un dispositif de fixation (5) selon l'une quelconque des revendications 1 à 19.

## Patentansprüche

1. Befestigungsvorrichtung (5) zum Befestigen einer Platte (2) an einer Struktur (3), wobei die Befestigungsvorrichtung (5) mit mindestens einer lösbaren Befestigungseinheit (7) versehen ist, die einen beweglichen Klotz (10) aufweist, der an der Platte (2) befestigt werden kann, und einen fest angebrachten Klotz (100), der auf der Struktur (3) befestigt werden kann, wobei der bewegliche Klotz (10) ein erstes Magnetisierungsmittel (15) aufweist, das mit einem zweiten Magnetisierungsmittel (115) des fest angebrachten Klotzes (100) zusammenwirkt, wobei mindestens eines des ersten Magnetisierungsmittels (15) und des zweiten Magnetisierungsmittels (115) einen Magneten (16) aufweist,
**dadurch gekennzeichnet, dass** mindestens ein Magnetisierungsmittel (15, 115) von einem Kugelgelenk (20, 200) des zugehörigen Klotzes getragen wird, wobei jedes Magnetisierungsmittel (15, 115) in Translationsrichtung fest mit einem Bewegungsmittel (30, 300) verbunden ist, um in Translationsrichtung entlang einer Längsachse (AX1, AX100) des zugehörigen Klotzes aus einer Eingriffsstellung (POS 1) in eine Entkopplungsstellung (POS2) umkehrbar bewegt zu werden, wobei die Längsachse (AX1) des beweglichen Klotzes "erste Längsachse" genannt wird und im Wesentlichen parallel zu einer Längsachse (AX100) des fest angebrachten Klotzes, genannt "zweite Längsachse", ist, wobei die Magnetisierungsmittel (15, 155) zueinander stark magnetisiert sind, wenn sie sich gegenüberliegen und beide in Eingriffsstellung (POS1) sind, und wobei diese nicht magnetisiert oder schwach magnetisiert sind, wenn mindestens eines der Magnetisierungsmittel (15, 115) sich in seiner Entkopplungsstellung (POS2) befindet.

2. Vorrichtung nach Anspruch 1,
**dadurch gekennzeichnet, dass** die Befestigungsvorrichtung (5) mindestens ein Schwenkgelenk (6) aufweist, das an der Platte (2) und an der Struktur (3) befestigt werden kann, um eine Drehung der Platte (2) relativ zu der Struktur (3) zu ermöglichen.

3. Vorrichtung nach einem der Ansprüche 1 bis 2,
**dadurch gekennzeichnet, dass** entweder jedes Magnetisierungsmittel (15, 115) einen Magneten (16) aufweist, oder ein Magnetisierungsmittel (15) einen Magneten (16) aufweist, und das andere Magnetisierungsmittel (115) eine Metallplatte (116) aufweist.

4. Vorrichtung nach einem der Ansprüche 1 bis 3,
**dadurch gekennzeichnet, dass** mindestens ein Magnetisierungsmittel (15) eine "Verbindungsfläche (17)" genannte Fläche aufweist zur Magnetisierung des anderen Magnetisierungsmittels (115), wobei die Verbindungsfläche (17) mit einem Gleitorgan (18) bedeckt ist.

5. Vorrichtung nach einem der Ansprüche 1 bis 4,
**dadurch gekennzeichnet, dass** mindestens ein Klotz (10, 100) ein Bewegungsmittel (30, 300) aufweist, das mit einem Arm (31, 131) versehen ist, wobei der Arm (31, 131) eine Endlosschraube (32, 132) aufweist, die in eine Schraubenmutter (33, 133) eingreift, die an einem Gehäuse des Klotzes (10, 100) befestigt ist, wobei das Bewegungsmittel (30, 300) mit einem Antriebsmittel (35, 135) versehen ist, um den Arm (31, 131) zu drehen, um die Translationsbewegung des Arms (31, 131) auszulösen.

6. Vorrichtung nach Anspruch 5,
**dadurch gekennzeichnet, dass** der Arm (31, 131) sich in Längsrichtung von einem Ende (31', 131'), das mit einem Magnetisierungsmittel verbunden ist, zu einem Ende (31", 131") erstreckt, das mit einer Zahnbasis versehen ist, wobei das Antriebsmittel (35, 135) ein in Querrichtung bewegliches Zahngestänge (40, 140) aufweist, wobei ein Rand der Basis (31", 131") mindestens teilweise gezahnt ist, indem er mindestens einen Zahn (34,134) aufweist, der in Eingriff mit dem Zahngestänge (40, 140) steht.

7. Vorrichtung nach Anspruch 6,
**dadurch gekennzeichnet, dass** das Antriebsmittel (35) des beweglichen Klotzes (10) ein Kabel (36) aufweist, das mit dem Zahngestänge (40) fest verbunden ist.

8. Vorrichtung nach einem der Ansprüche 5 bis 7,
**dadurch gekennzeichnet, dass** das Antriebsmittel (35) des beweglichen Klotzes (10) eine Öffnung (37) des Arms (31) aufweist, das den Kopf eines Verschraub-/Abschraubwerkzeugs (38) aufnehmen kann, wobei ein Gehäuse (11) des beweglichen Klotzes (10) einen Durchgang (39) aufweist, um ein solches Werkzeug (38) zu der Öffnung (37) zu führen.

9. Vorrichtung nach einem der Ansprüche 1 bis 8,
**dadurch gekennzeichnet, dass** die Befestigungsvorrichtung (5) ein Crash-Sicherheitssystem (50) aufweist, das mit einem Sicherheitsband (51) versehen ist, welches auf einem Aufroller (55) aufgerollt ist, der den beweglichen Klotz (10) selbstblockierend sperrt, wobei das Sicherheitsband (51) einen Kugelsperrbolzen (53) aufweist, der reversibel und manuell in das Gehäuse (150) des fest angebrachten Klotzes (100) einfügbar ist.

10. Vorrichtung nach Anspruch 9,
**dadurch gekennzeichnet, dass** der Aufroller (55) in Translationsrichtung entlang der ersten Längsachse (AX1) des beweglichen Klotzes (10) beweglich ist, indem er um ein Führungsmittel (14) eines Gehäuses (11) des beweglichen Klotzes (10) angeordnet ist, wobei der Aufroller (55) durch ein Federelement (60) gegen das Bewegungsmittel (30) angedrückt ist, um in Translationsrichtung des Magnetisierungsmittels (15) des beweglichen Klotzes (10) fest verbunden zu sein.

11. Vorrichtung nach einem der Ansprüche 9 bis 10,
**dadurch gekennzeichnet, dass** das Gehäuse (11) mindestens einen Zahn (65) aufweist, der mit einer gezahnten Fläche (55') des Aufrollers (55) zusammenwirkt, um eine Drehung des Aufrollers (55) in einer Abroll-Drehrichtung (S1) zu verhindern, die das Abzurollen des Sicherheitsbandes (51) ermöglicht, wenn das Magnetisierungsmittel sich in seiner Eingriffsstellung (POS1) befindet.

12. Vorrichtung nach einem der Ansprüche 9 bis 11,
**dadurch gekennzeichnet, dass** das Gehäuse (150) von einem Finger (141) eines Zahngestänges (140) durchquert wird, der mit dem Bewegungsmittel (300) des fest angebrachten Klotzes (100) in Abwesenheit des Kugelsperrbolzens (53) in Eingriff steht, wobei das Magnetisierungsmittel (115) des fest angebrachten Klotzes (100) sich in Abwesenheit des Kugelsperrbolzens (53) in der ausgerückten Stellung (POS2) befindet.

13. Vorrichtung nach einem der Ansprüche 9 bis 12,
**dadurch gekennzeichnet, dass** der Aufroller (55) eine Rückholfeder (70) aufweist, die eine Drehung des Aufrollers in einer Aufrollrichtung (S2) erzeugt, um das Sicherheitsband (51) auf dem Aufroller (55) aufzurollen.

14. Vorrichtung nach einem der Ansprüche 1 bis 13,
**dadurch gekennzeichnet, dass** der bewegliche Klotz (10) ein "erstes Zahngestänge (40)" genanntes Zahngestänge aufweist, das mit dem Bewegungsmittel des beweglichen Klotzes, welches "erstes Bewegungsmittel (30)" genannt wird, zusammenwirkt, wobei das erste Zahngestänge (40) beweglich ist zwischen einer ersten Stellung (POS11), die das Magnetisierungsmittel (15) des beweglichen Klotzes (10) in die Eingriffsstellung (POS1) verbringt, und einer zweiten Stellung (POS 12), die das Magnetisierungsmittel (15) des beweglichen Klotzes (10) in die Ausrückstellung (POS2) verbringt, wobei der bewegliche Klotz (10) ein erstes Federelement (42) aufweist, das eine Kraft ausübt, um das erste Zahngestänge (40) in die erste Stellung (POS11) zu verbringen.

15. Vorrichtung nach einem der Ansprüche 1 bis 14,
**dadurch gekennzeichnet, dass** der fest angebrachte Klotz (100) ein "zweites Zahngestänge (140)" genanntes Zahngestänge aufweist, das mit dem Bewegungsmittel des fest angebrachten Klotzes, welches "zweites Bewegungsmittel (300)" genannt wird, zusammenwirkt, wobei das zweite Zahngestänge (140) beweglich ist zwischen einer ersten Stellung (POS111), die das Magnetisierungsmittel (115) des fest angebrachten Klotzes (100) in die Eingriffsstellung (POS 1) verbringt, und einer zweiten Stellung (POS112), die das Magnetisierungsmittel (115) des fest angebrachten Klotzes (100) in die Ausrückstellung (POS2) verbringt, wobei der fest angebrachte Klotz (100) ein zweites Federelement (142) aufweist, das eine Kraft ausübt zur Positionierung des zweiten Zahngestänges (140) in seiner zweiten Stellung (POS 112).

16. Vorrichtung nach einem der Ansprüche 1 bis 15,
**dadurch gekennzeichnet, dass** der bewegliche Klotz (10) ein erstes Magnetisierungsmittel (15) aufweist, das von einem ersten Bewegungsmittel (30) getragen wird, wobei das erste Bewegungsmittel (30) einen Rahmen (31) aufweist, der mit dem ersten Magnetisierungsmittel sowie mit einer ersten Basis (31") verbunden ist, und wobei eine erste Endlosschraube (32) sich zwischen dem ersten Magnetisierungsmittel und der ersten Basis (31") erstreckt, indem sie eine erste fest angebrachte Schraubenmutter (33) durchquert, wobei die erste Basis (31") Zähne (34) aufweist, die in Eingriff mit einem ersten Zahngestänge (40) stehen, wobei der bewegliche Klotz (10) einen Aufroller (55) aufweist, auf dem ein Sicherheitsband (51) aufgerollt ist, das einen Kugelsperrbolzen (53) aufweist, wobei der Aufroller (55) in Translationsrichtung entlang einer ersten Längsachse (AX1) des beweglichen Klotzes (10) beweglich ist und von einem ersten Federelement (42) gegen das erste Bewegungsmittel (30) angedrückt wird, damit dieses in Translationsrichtung des ersten Magnetisierungsmittels (15) mit dem beweglichen Klotz (10) fest verbunden ist, wobei der Aufroller (55) eine gezahnte Fläche (55') aufweist, die in Eingriff mit mindestens einem Zahn (65) eines Gehäuses (11) des beweglichen Klotzes (10) in der Eingriffsstellung (POS1) steht.

17. Vorrichtung nach einem der Ansprüche 1 bis 16,
**dadurch gekennzeichnet, dass** der fest angebrachte Klotz (100) ein zweites Magnetisierungsmittel (115) aufweist, das von einem zweiten Bewegungsmittel (300) getragen wird, wobei das zweite Bewegungsmittel (300) einen Arm (131) aufweist, der mit dem zweiten Magnetisierungsmittel sowie mit einer zweiten Basis (131") verbunden ist, und eine zweite Endlosschraube (132), die sich zwischen dem zweiten Kugelgelenk (200) und der zweiten Basis (131") erstreckt, indem sie eine zweite fest angebrachte Schraubenmutter (133) durchquert, wobei die zweite Basis (131") Zähne (134) aufweist, die in Eingriff mit einem zweiten Zahngestänge (140) stehen, wobei das zweite Zahngestänge (140) ein Gehäuse (150) aufweist, in das ein Kugelsperrbolzen (53) des beweglichen Klotzes (10) eingesteckt werden kann.

18. Vorrichtung nach einem der Ansprüche 1 bis 17,
**dadurch gekennzeichnet, dass** die Befestigungsvorrichtung (5) ein Element aus einem Elastomer (80, 180) aufweist, das zwischen dem Magnetisierungsmittel eines Klotzes (10, 100) und einem Gehäuse (11, 111) dieses Klotzes (10, 100) angeordnet ist, entweder zwischen einem Kugelgelenk und dem Gehäuse oder zwischen dem Bewegungsmittel (30, 300) und dem Gehäuse (11, 111).

19. Vorrichtung nach einem der Ansprüche 1 bis 18,
**dadurch gekennzeichnet, dass** jedes Magnetisierungsmittel von einem Kugelgelenk getragen wird.

20. Luftfahrzeug (1) mit einer Struktur und mindestens einer Verkleidungsplatte,
**dadurch gekennzeichnet, dass** dieses Luftfahrzeug (1) mindestens eine Befestigungsvorrichtung (5) nach einem der Ansprüche 1 bis 19 aufweist.

## Claims

1. Fastening device (5) for fastening a panel (2) to a structure (3), the fastening device (5) being provided with at least one reversible fastening assembly (7) comprising a movable stud (10) suitable for being fastened to the panel (2) and a stationary stud (100) suitable for being fastened to the structure (3), said movable stud (10) comprising a first magnetization means (15) cooperating with a second magnetization means (115) of said stationary stud (100), at least one of said first magnetization means (15) and second magnetization means (115) comprising a magnet (16),
**characterized in that** at least one magnetization means (15, 115) is carried by a ball joint (20, 200) of the associated stud, each magnetization means (15, 115) being integral in translation with a movement means (30, 300) in order to be moved in translation along a longitudinal axis (AX1, AX100) of the associated stud from an engagement position (POS1) to a disengagement position (POS2) in reversible manner, the longitudinal axis (AX1) of the movable stud being referred to as the "first longitudinal axis" and being substantially parallel to the longitudinal axis (AX100) of the stationary stud, referred to as the "second longitudinal axis", the magnetization means (15, 155) being strongly magnetized to each other when they are facing and each is in the engagement position (POS1), and being not magnetized or weakly magnetized when at least one magnetization means (15, 115) is in its disengagement position (POS2).

2. Device according to claim 1,
**characterized in that** the fastening device (5) comprises at least one pivot joint (6) suitable for being fastened to the panel (2) and to said structure (3) in order to allow a rotation (ROT) of the panel (2) relative to the structure (3).

3. Device according to any one of claims 1 to 2,
**characterized in that** either each magnetization means (15, 115) comprises a magnet (16), or one magnetization means (15) comprises a magnet (16) and the other magnetization means (115) comprises a metal plate (116).

4. Device according to any one of claims 1 to 3,
**characterized in that** at least one magnetization means (15) comprising a face referred to as a "connection face (17)" to be magnetized to the other magnetization means (115), said connection face (17) is covered by an antifriction member (18).

5. Device according to any one of claims 1 to 4,
**characterized in that** at least one stud (10, 100) comprises a movement means (30, 300) provided with an arm (31, 131), said arm (31, 131) comprising a worm (32, 132) engaged in a nut (33, 133) attached to a casing of the stud (10, 100), said movement means (30, 300) being provided with a drive means (35, 135) for driving said arm (31, 131) in rotation so as to induce the translation of the arm (31, 131).

6. Device according to claim 5,
**characterized in that** said arm (31, 131) extends longitudinally from an end (31', 131') connected to a magnetization means towards an end (31", 131") provided with a notched base, said drive means (35, 135) comprising a transversely movable rack (40, 140), a periphery of said base (31", 131") being at least partly notched, comprising at least one notch (34, 134) engaged with said rack (40, 140).

7. Device according to claim 6,
**characterized in that** said drive means (35) of the movable stud (10) comprises a cable (36) secured to said rack (40).

8. Device according to any one of claims 5 to 7,
**characterized in that** said drive means (35) of the movable stud (10) comprises an orifice (37) in the arm (31) suitable for receiving the head of a screwing/unscrewing tool (38), a casing (11) of said movable stud (10) comprising a passage (39) for guiding such a tool (38) towards said orifice (37).

9. Device according to any one of claims 1 to 8,
**characterized in that** said fastening device (5) comprises a crash-resistant system (50) provided with a safety line (51) wound around an automatically-locking winder (55) of said movable stud (10), said safety line (51) carrying a ball pin (53) reversibly and manually insertable into a receptacle (150) of the stationary stud (100).

10. Device according to claim 9,
**characterized in that** said winder (55) is movable in translation along said first longitudinal axis (AX1) of the movable stud (10) while being arranged around a guide means (14) of a casing (11) of said movable stud (10), said winder (55) being pressed by a spring member (60) against said movement means (30) so as to be integral in translation with the magnetization means (15) of the movable stud (10).

11. Device according to any one of claims 9 to 10,
**characterized in that** the casing (11) comprises at least one notch (65) cooperating with a notched face (55') of the winder (55) in order to prevent a rotation of the winder (55) in an unwinding direction of rotation (S1) making it possible to unwind said safety line (51), when the magnetization means is in its engagement position (POS1).

12. Device according to any one of claims 9 to 11,
**characterized in that** said receptacle (150) is traversed by a finger (141) of a rack (140) engaged on the movement means (300) of the stationary stud (100) in the absence of the ball pin (53), said magnetization means (115) of the stationary stud (100) being in the disengagement position (POS2) in the absence of the ball pin (53).

13. Device according to any one of claims 9 to 12,
**characterized in that** said winder (55) comprises a return spring (70) tending to generate a rotation of the winder in a winding direction of rotation (S2) in order to wind said safety line (51) around the winder (55).

14. Device according to any one of claims 1 to 13,
**characterized in that** said movable stud (10) comprising a rack referred to as a "first rack (40)" cooperating with the movement means of the movable stud referred to as the "first movement means (30)", the first rack (40) being movable between a first position (POS11) setting the magnetization means (15) of the movable stud (10) into the engagement position (POS1) and a second position (POS12) setting the magnetization means (15) of the movable stud (10) into the disengagement position (POS2), said movable stud (10) comprises a first spring member (42) exerting a force tending to position the first rack (40) in the first position (POS11).

15. Device according to any one of claims 1 to 14,
**characterized in that** said stationary stud (100) comprising a rack (100) referred to as a "second rack (140)" cooperating with the movement means of the stationary stud referred to as the "second movement means (300)", the second rack (140) being movable between a first location (POS111) setting the magnetization means (115) of the stationary stud (100) into the engagement position (POS1) and a second location (POS112) setting the magnetization means (115) of the stationary stud (100) into the disengagement position (POS2), said stationary stud (100) comprises a second spring member (142) exerting a force tending to position the second rack (140) in its second location (POS112).

16. Device according to any one of claims 1 to 15,
**characterized in that** the movable stud (10) comprises a first magnetization means (15) carried by a first movement means (30), the first movement means (30) comprising an arm (31) connected to the first magnetization means as well as a first base (31") and a first worm (32) extending between the first magnetization means and the first base (31") while passing through a first stationary nut (33), said first base (31") comprising notches (34) engaged with a first rack (40), said movable stud (10) having a winder (55) around which there is wound a safety line (51) carrying a ball pin (53), said winder (55) being movable in translation along said first longitudinal axis (AX1) of the movable stud (10) and being pushed by a first spring member (42) against said first movement means (30) so as to be integral in translation with the first magnetization means (15) of the movable stud (10), said winder (55) comprising a notched face (55') engaged with at least one notch (65) of a casing (11) of the movable stud (10) in the engagement position (POS1).

17. Device according to any one of claims 1 to 16,
**characterized in that** the stationary stud (100) comprises a second magnetization means (115) carried by a second movement means (300), the second movement means (300) comprising an arm (131) connected to the second magnetization means as well as a second base (131") and a second worm (132) extending between the second ball joint (200) and the second base (131") while passing through a second stationary nut (133), said second base (131") comprising notches (134) engaged with a second rack (140), said second rack (140) having a receptacle (150) in which a ball pin (53) of the movable stud (10) can be engaged.

18. Device according to any one of claims 1 to 17,
**characterized in that** the fastening device (5) comprises a member (80, 180) made from elastomer interposed between the magnetization means of a stud (10, 100) and a casing (11, 111) of the stud (10, 100), either between a ball joint and said casing or by being interposed between the movement means (30, 300) and said casing (11, 111).

19. Device according to any one of claims 1 to 18,
**characterized in that** each magnetization means is carried by a ball joint.

20. Aircraft (1) provided with a structure and with at least one trim panel,
**characterized in that** the aircraft (1) comprises at least one fastening device (5) according to any one of claims 1 to 19.
